# EUROPÄISCHE PATENTSCHRIFT

(11) **EP 2 838 660 B1**
(45) Veröffentlichungstag und Bekanntmachung des Hinweises auf die Patenterteilung: **18.03.2020**
(21) Anmeldenummer: 13719439.5
(22) Anmeldetag: 14.04.2013
(51) Int. Cl.: B01L 9/00, G01N 35/10

(54) **PIPETTIERAUTOMAT MIT ENTSORGUNGSBEHÄLTER**
AUTOMATED DISPENSING APPARATUS WITH WASTE CONTAINER
DISPOSITIF DE DOSAGE AUTOMATIQUE AVEC RÉCIPIENT DE DÉCHETS

(30) Priorität: 17.04.2012 DE 102012206239
(43) Veröffentlichungstag der Anmeldung: 25.02.2015
(73) Patentinhaber: Hamilton Bonaduz AG, 7402 Bonaduz (CH)
(72) Erfinder: PEETZ, Torsten, CH-7000 Chur (CH); STÄDLER, Andreas, CH-7012 Felsberg (CH)
(74) Vertreter: Müller Hoffmann & Partner
(86) Internationale Anmeldenummer: PCT/EP2013/057749
(87) Internationale Veröffentlichungsnummer: WO 2013/156418

(56) Entgegenhaltungen:
- EP-A2- 0 114 686
- EP-A2- 1 832 880
- JP-A- H11 287 810
- JP-A- 2011 059 012
- US-A1- 2001 005 489
- US-A1- 2004 108 330
- US-A1- 2005 150 314
- US-A1- 2007 269 343
- US-B1- 6 358 470

## Beschreibung

Die vorliegende Erfindung betrifft eine Dosiervorrichtung, insbesondere Pipettierautomat, umfassend eine in drei zueinander orthogonalen Richtungen (X, Y, Z) bewegliche Pipettiervorrichtung mit wenigstens einem Pipettierkanal an welchem eine Pipettierspitze lösbar angebracht oder anbringbar ist, um Probenflüssigkeit aus einem der Dosiervorrichtung zugeordneten Probenbehälter zu aspirieren oder in einen Probenbehälter zu dispensieren, wobei der wenigstens eine Pipettierkanal derart eingerichtet ist, dass eine lösbar an ihm angebrachte Pipettierspitze von dem Pipettierkanal getrennt werden kann, vorzugsweise automatisch getrennt werden kann, und einen an der Dosiervorrichtung angeordneten Entsorgungsbehälter, in welchem gebrauchte Pipettierspitzen nach Trennung von einem betreffenden Pipettierkanal aufnehmbar sind.

Bei bekannten Dosiervorrichtungen, insbesondere Pipettierautomaten, wie sie beispielsweise aus US6 358 470 B1 bekannt sind, ist der Entsorgungsbehälter an einer bestimmten Position der Dosiervorrichtung in der Regel fest angebracht. Der Entsorgungsbehälter ist kann beispielsweise in Form eines an der Dosiervorrichtung angeordneten Sacks ausgeführt sein, in den gebrauchte Pipettierspitzen fallen gelassen werden. Ein derartiger ortsfester Entsorgungsbehälter wird nach jedem Pipettiervorgang mittels einer Zustellbewegung der Pipettiervorrichtung gesondert angefahren. Anschließend erfolgt eine Bewegung der Pipettiervorrichtung zu einem an der Dosiervorrichtung vorgesehenen Vorratsbehälter für Pipettierspitzen, um saubere Pipettierspitzen für den nächsten Pipettiervorgang aufzunehmen. Das Trennen der gebrauchten Pipettierspitzen von betreffenden Pipettierkanälen erfolgt somit immer am Ende der gesonderten Zustellbewegung zum Entsorgungsbehälter hin. Das Bewegen der Pipettiervorrichtung zum Entsorgungsbehälter hin und von diesem wieder zum Vorratsbehälter für Pipettierspitzen benötigt Zeit und führt zu einer längeren Dauer eines gesamten Pipettierprozesses, in welchem mehrere Pipettiervorgänge automatisiert nacheinander abgearbeitet werden.

Bei Pipettierspitzen, die eine Länge aufweisen, die ein großes Vielfaches ihres maximalen Durchmessers beträgt, beispielsweise etwa das 5- bis 25-fache, ergibt sich in dem bekannten Entsorgungsbehälter eine zufällige und Entsorgungsvolumen verschwendende Anordnung von Pipettierspitzen. Dies liegt daran, dass die Pipettierspitzen beliebig orientiert im Entsorgungsbehälter aufgenommen werden, wobei sich die Pipettierspitzen unter Wirkung der Schwerkraft und unter Wirkung des Auftreffens auf bereits entsorgte Pipettierspitzen zufällig ausrichten. Es ergibt sich somit eine chaotische Anordnung von gebrauchten Pipettierspitzen im Entsorgungsbehälter.

Aufgabe der Erfindung ist es, eine Dosiervorrichtung mit Entsorgungsbehälter bereitzustellen, bei welchem die obigen Nachteile vermieden werden können.

Hierzu wird gemäß einem ersten Aspekt vorgeschlagen, dass der Entsorgungsbehälter in wenigstens eine Richtung relativ zu dem wenigstens einen Probenbehälter beweglich an der Dosiervorrichtung angeordnet ist, wobei die Pipettiervorrichtung und der Entsorgungsbehälter wenigstens temporär in der gleichen Richtung beweglich sind, vorzugsweise synchron beweglich sind.

Durch die Beweglichkeit des Entsorgungsbehälters in wenigstens eine Richtung ist es möglich, dass das Entsorgen von Pipettierspitzen, insbesondere deren Trennung von betreffenden Pipettierkanälen während einer Bewegung der Pipettiervorrichtung in diese Richtung(en) erfolgt. Somit kann beispielsweise beim Entsorgen der gebrauchten Pipettierspitzen bereits eine Bewegung im Hinblick auf einen nächsten Pipettiervorgang durchgeführt werden, wobei gleichzeitig der Entsorgungsvorgang für die gebrauchten Pipettierspitzen stattfindet. Hieraus ergibt sich eine Wegoptimierung und somit auch eine Zeitersparnis bei der Durchführung von einzelnen Pipettiervorgängen und von gesamten Pipettierprozessen.

Vorzugsweise sind die Probenbehälter in einem Pipettierbereich einer Aufnahmeplatte der Dosiervorrichtung angeordnet, wobei die Aufnahmeplatte in einer durch eine erste und eine zweite Richtung (X, Y) definierten Ebene angeordnet ist, und vorzugsweise im Wesentlichen horizontal ausgerichtet ist, und wobei die Pipettiervorrichtung und der Entsorgungsbehälter relativ zur Aufnahmeplatte beweglich sind.

Gemäß einer bevorzugten Ausgestaltung ist der Entsorgungsbehälter entlang eines Randes der Aufnahmeplatte beweglich, wobei der Rand vorzugsweise parallel zur ersten Richtung (X) verläuft.

Weiterbildend wird vorgeschlagen, dass die Pipettiervorrichtung einen zur Aufnahmeplatte im Wesentlichen orthogonal ausgerichteten Vertikalträger aufweist, welcher entlang der ersten Richtung (X) beweglich ist, vorzugsweise mittels einer motorischen Antriebseinrichtung, insbesondere Linearmotor, Elektromotor mit Getriebe oder dergleichen.

Der Entsorgungsbehälter kann am Vertikalträger anbringbar oder angebracht sein, wobei der Vertikalträger und der Entsorgungsbehälter in der angebrachten Stellung lösbar miteinander verbunden sind, vorzugsweise derart, dass der Vertikalträger und der Entsorgungsbehälter bewegungsgekoppelt sind.

Es wird ferner vorgeschlagen, dass der Entsorgungsbehälter bezogen auf die zweite Richtung zwischen dem Vertikalträger und dem Pipettierbereich der Aufnahmeplatte angeordnet ist.

Der Entsorgungsbehälter kann ferner relativ zur Pipettiervorrichtung, insbesondere relativ zum Vertikalträger in wenigstens einer Richtung, vorzugsweise der ersten Richtung (X) beweglich sein, um den Entsorgungsbehälter in eine gewünschte Position an der Pipettiervorrichtung, insbesondere gewünschte Relativstellung zum Vertikalträger bringen zu können. Eine solche der gemeinsamen Bewegung von Entsorgungsbehälter und Vertikalträger überlagerte Relativbewegung des Entsorgungsbehälters ermöglicht auch eine gewünschte Positionierung des Entsorgungsbehälters relativ zu den Pipettierkanälen, von denen die Pipettierspitzen in den Entsorgungsbehälter herunterfallen. Ferner kann eine solche relative Beweglichkeit des Entsorgungsbehälters auch im Hinblick darauf vorteilhaft sein, dass der Entsorgungsbehälter automatisch in eine Entnahme- oder Entleerungsstellung bewegt werden kann, in welcher er beispielsweise durch eine Bedienperson aus der Pipettiervorrichtung entnommen werden kann oder in der er automatisiert entleert werden kann.

Gemäß einem zweiten Aspekt der Erfindung, der sowohl selbständig als auch weiterbildend sein kann, wird vorgeschlagen, dass der Entsorgungsbehälter derart ausgeführt ist, dass darin aufgenommene Pipettierspitzen nach dem Trennen von einem betreffenden Pipettierkanal im Entsorgungsbehälter ausgerichtet angeordnet sind bzw. werden.

Eine ausgerichtete Anordnung von gebrauchten Pipettierspitzen im Entsorgungsbehälter ermöglicht die Aufnahme einer größeren Anzahl von Pipettierspitzen verglichen mit einer zufälligen Anordnung. Der bewegliche Entsorgungsbehälter kann aufgrund der konstruktiven Randbedingungen der Pipettiervorrichtung in der Regel keine beliebige Form und Größe aufweisen. Es ist daher besonders vorteilhaft, wenn das zur Verfügung stehende Entsorgungsvolumen im Entsorgungsbehälter optimiert genutzt werden kann. Eine ausgerichtete Anordnung der Pipettierspitzen ist speziell dann von großem Vorteil, wenn die Pipettierspitzen eine deutlich längliche Gestalt haben, d.h. Wenn deren Gesamtlänge ein Vielfaches von ihrem maximalen Durchmesser beträgt, wobei beispielhaft von einer Länge ausgegangen werden kann, die etwa das 5- bis 25-fache des maximalen Durchmessers beträgt.

Um eine Ausrichtung von in den Entsorgungsbehälter fallenden Pipettierspitzen zu begünstigen, wird vorgeschlagen, dass im Entsorgungsbehälter wenigstens ein Führungselement vorgesehen ist, das derart ausgebildet ist, dass von dem wenigstens einen Pipettierkanal in den Entsorgungsbehälter fallende Pipettierspitzen unter Einwirkung des wenigstens einen Führungselements und der Schwerkraft ausgerichtet im Entsorgungsbehälter angeordnet ist bzw. wird, wobei die Pipettierspitzen vorzugsweise auf ihrer Umfangsfläche liegend im Entsorgungsbehälter nebeneinander und übereinander angeordnet sind bzw. werden. Vorzugsweise führt die Wirkung des wenigstens einen Führungselements und der Schwerkraft dazu, dass die Pipettierspitzen im Wesentlichen parallel zueinander ausgerichtet und neben- bzw. übereinander angeordnet bzw. gestapelt werden können.

Der Entsorgungsbehälter weist bevorzugt eine Aufnahmeöffnung auf, die in der angebrachten Stellung an der Pipettiervorrichtung dem wenigstens einen Pipettierkanal zugewandt ist und durch die hindurch im Entsorgungsbehälter aufzunehmende Pipettierspitzen fallen. Dabei kann der Entsorgungsbehälter eine Bodenwand, eine erste und eine zweite mit der Bodenwand verbundene Seitenwand sowie eine erste und eine zweite mit der Bodenwand und den Seitenwänden verbundene Stirnwand aufweisen, wobei die oberen Ränder der Seitenwände und der Stirnwände die Aufnahmeöffnung begrenzen.

Weiterbildend wird vorgeschlagen, dass unterhalb der Aufnahmeöffnung ein erstes Führungselement im Entsorgungsbehälter angeordnet ist, das durch eine geneigte erste Aufprallfläche gebildet ist. Die erste Aufprallfläche kann sich von der ersten Seitenwand des Entsorgungsbehälters in Richtung der zweiten Seitenwand und in Richtung der beiden Stirnwände erstrecken, wobei zwischen der zweiten Seitenwand und einem der zweiten Seitenwand zugewandten Rand der ersten Aufprallfläche ein Freiraum gebildet ist, durch den an der ersten Aufprallfläche abgelenkte Pipettierspitzen fallen können.

Durch die Anordnung der ersten Aufprallfläche unterhalb der Aufnahmeöffnung kann gewährleistet werden, dass ein Aufprall einer zu entsorgenden Pipettierspitze derart erfolgt, dass die Wahrscheinlichkeit einer Kollision mit dem oberen Rand der Seiten- und Stirnwände minimiert ist, so dass die Pipettierspitze sicher in den Entsorgungsbehälter gelangen kann. Die Neigung der ersten Aufprallfläche kann so gewählt werden, dass eine im Wesentlichen in Vertikalrichtung herunterfallende Pipettierspitze in einem bestimmten Winkel auf die erste Aufprallfläche auftrifft und auf diese Weise in eine gewünschte Richtung abgelenkt wird im Hinblick auf die zu erzielende ausgerichtete Anordnung der Pipettierspitze.

Es ist besonders bevorzugt, dass die erste Aufprallfläche bezogen auf eine durch die Bodenwand definierte Ebene vorzugsweise zu beiden Hauptrichtungen der Bodenwandebene geneigt ausgeführt ist, wobei vorzugsweise die Bodenwandebene eine parallele Ebene zu der durch die erste und zweite Richtung (X, Y) definierten Ebene bzw. zur Aufnahmeplatte bildet, wenn der Entsorgungsbehälter an der Dosiervorrichtung angebracht ist. Eine derartige Neigung in zwei Richtungen führt dazu, dass eine herunterfallende Pipettierspitze nach dem Auftreffen ihrer Spitze auf der ersten Aufprallfläche gezielt so abgelenkt wird, dass sie von einer im Wesentlichen vertikalen Ausrichtung in eine im Wesentlichen horizontale Lage gebracht wird, wobei sie mit ihrer Umfangsfläche auf der Aufprallfläche aufschlagen kann und entlang dieser Fläche in Richtung des Freiraums rutschen kann.

Um die Ausrichtung der Pipettierspitzen weiter zu verbessern wird ferner vorgeschlagen, dass unterhalb der ersten Aufprallfläche, insbesondere unterhalb des Freiraums wenigstens ein weiteres Führungselement ausgebildet ist, das vorzugsweise als geneigte weitere Aufprallfläche ausgebildet ist, wobei vorzugsweise die erste und die wenigstens eine weitere Aufprallfläche kaskadenartig abwechselnd an der ersten und der zweiten Seitenwand angeordnet sind. Eine durch die erste Aufprallfläche in eine im Wesentlichen horizontale Lage gebrachte Pipettierspitze kann somit durch den Freiraum fallen und schlägt auf das weitere Führungselement auf und wird von diesem entsprechend der Neigung seiner Aufprallfläche in eine gewünschte Richtung abgelenkt, so dass durch das Zusammenspiel der mehreren Führungselemente die Ausrichtung der herunterfallenden Pipettierspitzen mit großer Sicherheit erreicht werden kann.

In einer Stirnwand des Entsorgungsbehälters kann wenigstens eine Entleerungsöffnung vorgesehen sein, durch welche hindurch im Entsorgungsbehälter aufgenommene Pipettierspitzen aus dem Entsorgungsbehälter entfernbar sind. Hierzu wird weiter vorgeschlagen, dass in der betreffenden Stirnwand zwei übereinander angeordnete Entleerungsöffnungen vorgesehen sind, wobei vorzugsweise die Führungselemente im Entsorgungsbehälter derart angeordnet sind, dass im Entsorgungsbehälter aufgenommene Pipettierspitzen in einer bestimmten Entleerungsstellung des Entsorgungsbehälters unter Wirkung der Führungselemente und der Schwerkraft in Richtung der Entleerungsöffnungen bewegt werden. Die Anordnung und Neigung der mehreren Führungselemente ist somit nicht nur für die ausgerichtete Anordnung der Pipettierspitzen vorteilhaft, sondern sie ermöglich auch eine einfache und vollständige Entleerung des Entsorgungsbehälters. Gemäß einen dritten Aspekt der Erfindung wird ein Entsorgungsbehälter vorgeschlagen für längliche, wenigstens abschnittsweise zylindrisch ausgebildete Gegenstände, insbesondere Pipettierspitzen einer Dosiervorrichtung, wie etwa Handpipette oder Pipettierautomat, umfassend eine Aufnahmeöffnung durch welche hindurch im Entsorgungsbehälter aufzunehmende Gegenstände fallen, dadurch gekennzeichnet, dass der Entsorgungsbehälter derart ausgeführt ist, dass darin aufgenommene Gegenstände im Entsorgungsbehälter ausgerichtet angeordnet sind bzw. werden, wobei vorzugsweise im Entsorgungsbehälter wenigstens ein Führungselement vorgesehen ist, das derart ausgebildet ist, dass in den Entsorgungsbehälter fallende Gegenstände unter Einwirkung des wenigstens einen Führungselements und der Schwerkraft ausgerichtet im Entsorgungsbehälter angeordnet sind bzw. werden, wobei die Gegenstände vorzugsweise auf ihrer Umfangsfläche liegend im Entsorgungsbehälter nebeneinander und übereinander angeordnet sind bzw. werden.

Ein derartiger Entsorgungsbehälter kann somit nicht nur für Pipettierspitzen als bevorzugter Gegenstand eingesetzt werden, sondern auch für andere längliche Artikel, wie beispielsweise Spritzen, Kapillarröhrchen und dergleichen. Dabei kann der zu entsorgende Gegenstand auch manuell von einer Person in den Entsorgungsbehälter fallen gelassen werden.

Ein derartiger Entsorgungsbehälter kann wenigstens ein weiteres dem Entsorgungsbehälter zugeordnetes Merkmal gemäß den obigen Ausführungen aufweisen, unabhängig davon, ob er an einer oben beschriebenen Dosiervorrichtung eingesetzt wird.

Nachfolgend wird die Erfindung anhand einer Ausführungsform beispielhaft und nicht einschränkend beschrieben.
- Fig. 1: zeigt in vereinfachter schematischer Perspektivdarstellung eine Ausführungsform einer Dosiervorrichtung mit Entsorgungsbehälter.
- Fig. 2: zeigt die Dosiervorrichtung der Fig. 1 in einer frontalen Ansicht in einer ersten Richtung (X).
- Fig. 3: zeigt die Dosiervorrichtung der Fig. 1 als Draufsicht aus einer weiteren Richtung (Z).
- Fig. 4: zeigt in vereinfachter und schematischer Darstellung eine Ausführungsform eines Entsorgungsbehälters für die Dosiervorrichtung.
- Fig. 5: zeigt den Entsorgungsbehälter in einer zur Entleerung desselben geeigneten Stellung.
- Fig. 6: zeigt eine vereinfachte und schematische Schnittdarstellung entsprechend den Schnittlinien VI-VI der Fig. 4 und 8.
- Fig. 7: zeigt eine vereinfachte und schematische Draufsicht auf eine Aufnahmeöffnung des Entsorgungsbehälters der Fig. 4 aus der weiteren Richtung (Z).
- Fig. 8: zeigt eine vereinfachte und schematische Schnittdarstellung entsprechend der Schnittlinie VIII-VIII der Fig.4 und 7.

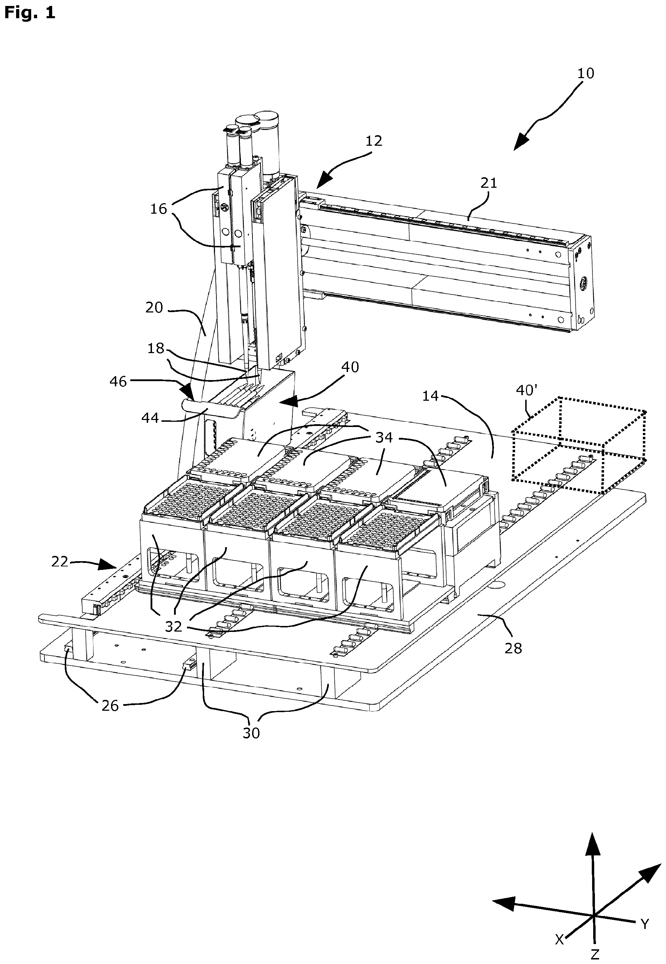

Aus der Zusammenschau der Fig. 1 bis 3 ist eine Dosiervorrichtung 10 mit einer Pipettiervorrichtung 12 ersichtlich. Die Pipettiervorrichtung 12 ist relativ zu einer Aufnahmeplatte 14 der Dosiervorrichtung beweglich ausgeführt, wobei mittels der Pipettiervorrichtung 12 Pipettierkanäle 16 und daran angebrachte Pipettierspitzen 18 in drei zueinander orthogonale Richtungen X, Y und Z bewegt werden können. In X-Richtung erfolgt die Bewegung der Pipettiervorrichtung 12 mittels eines an der Aufnahmeplatte 14 angeordneten Vertikalträgers 20. Der Vertikalträger 20 ist in X-Richtung entlang des Randes der Aufnahmeplatte 14 beweglich, vorzugsweise mittels eines motorischen Antriebs und einer entsprechenden linearen Führung. Im hier gezeigten Ausführungsbeispiel wird der Vertikalträger 20 durch einen Linearmotor angetrieben, der bei 22 angedeutet ist. Der Vertikalträger 20 weist einen im Wesentlichen horizontal liegenden Stützträger 24 auf, der auf zwei Führungsschienen 26 aufliegt. Die Führungsschienen sind mit einer parallel zur Aufnahmeplatte 14 angeordneten Trägerplatte 28 verbunden. Die Aufnahmeplatte 14 ist oberhalb der Trägerplatte 28 angeordnet und mit dieser über stützenartige Träger 30 verbunden. An einem oberen Abschnitt des Vertikalträgers 20 ist ein Querträger 21 angebracht, entlang dessen sich die Pipettierkanäle 16 in Y-Richtung bewegen können mittels einer zugehörigen Antirebseinrichtung, wie etwa Motor mit Getriebe, Linerarmotor und derlgeichen. Die Pipettierkanäle 16 und gegebenenfalls daran angebrachte Pipettierspitzen 18 sind schließlich mittels eines entsprechenden weiteren Antriebs, wie etwa Spindelantrieb oder dergleichen in Z-Richtung beweglich.

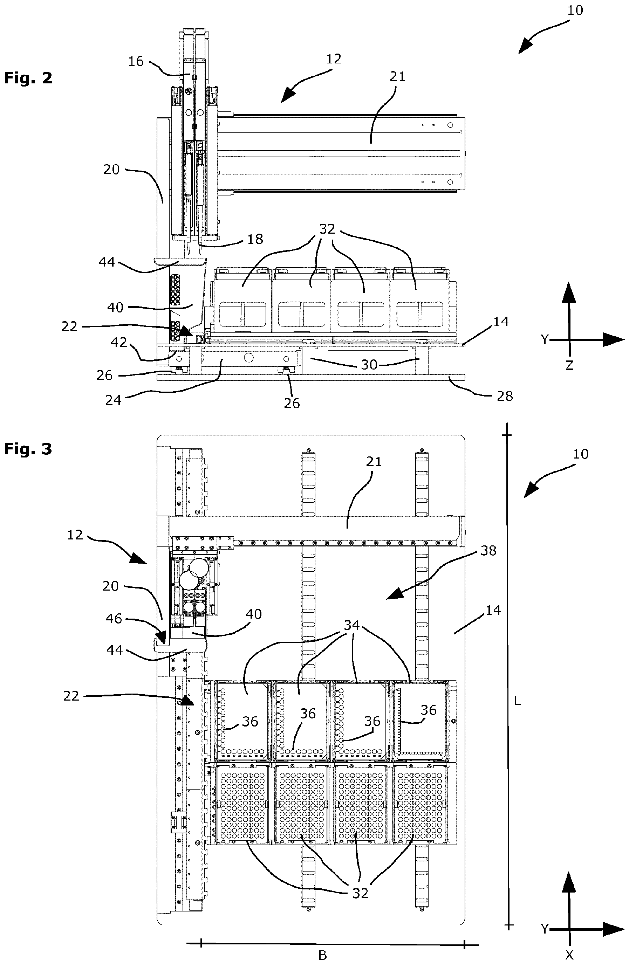

Auf der Aufnahmeplatte 14 sind Pipettierspitzenbehälter 32 angeordnet, die als Vorratsbehälter bzw. Reservoir für ungebrauchte Pipettierspitzen 18 dienen. Ferner sind mit 34 Probenbehälter angedeutet, in denen zu untersuchende Probenflüssigkeit in entsprechenden Vertiefungen 36 aufgenommen werden kann. Mittels der Pipettierkanäle 16 und der daran angebrachten Pipettierspitzen 18 kann Probenflüssigkeit aus Vertiefungen 36 der Probenbehälter 34 entnommen (aspiriert) und in andere Vertiefungen 36 des gleichen oder eines anderen Probenbehälters 34 abgegeben (dispensiert) werden. Der Bereich der Aufnahmeplatte 14, auf welchem Pipettierspitzenbehälter 32 oder/und Probenbehälter 34 oder/und weitere für eine derartige Dosiervorrichtung 10 mögliche Arbeitsmaterialien bzw. Arbeitsgeräte angeordnet werden können, wird hier als Pipettierbereich 38 bezeichnet mit einer Längsausdehnung L in X-Richtung und einer Querausdehnung B in Y-Richtung (Fig. 3).

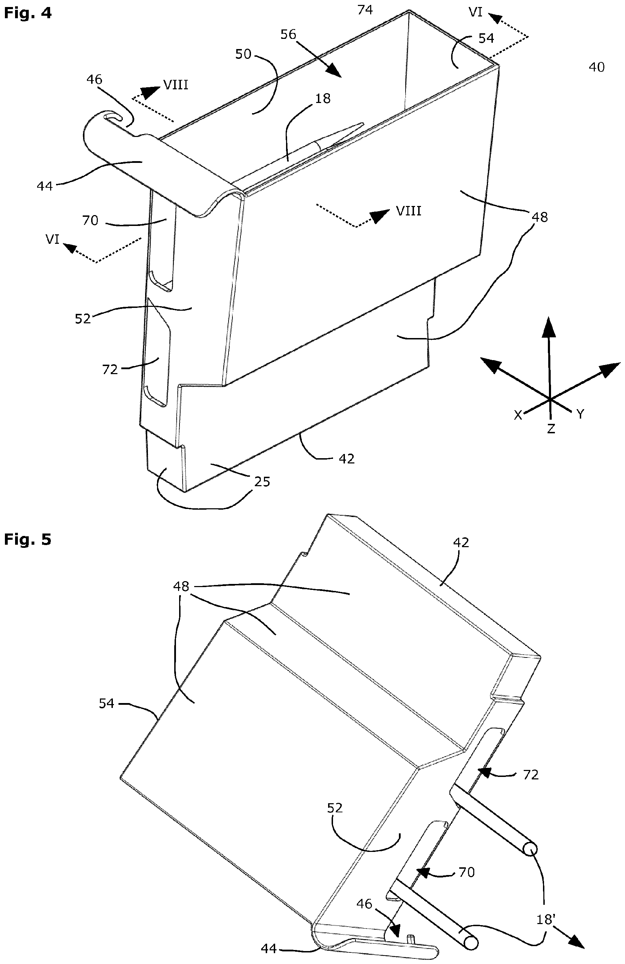

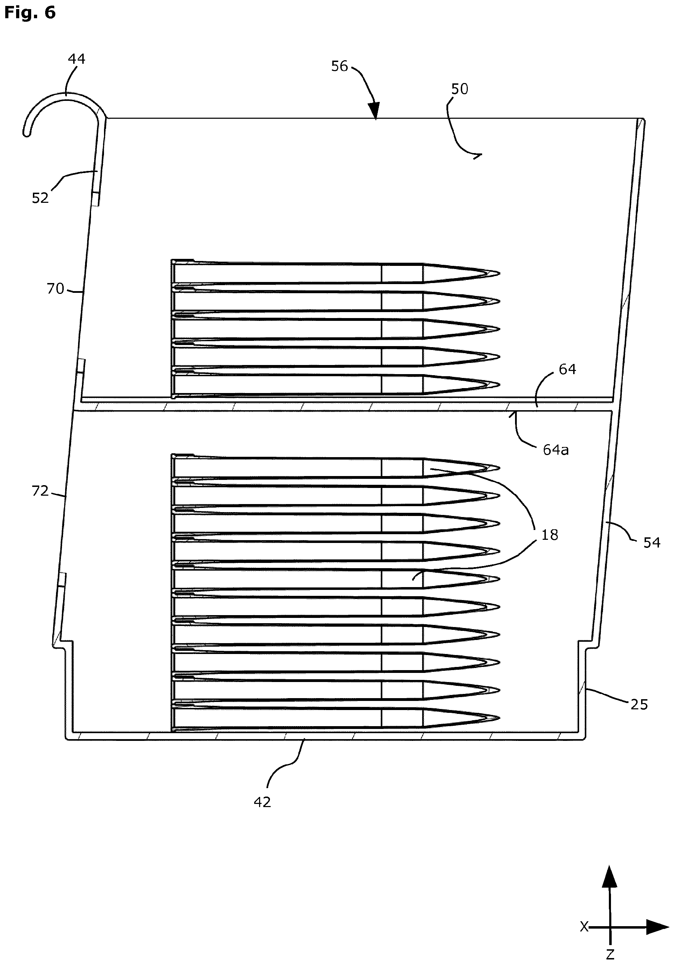

Wie speziell aus den Fig. 1 und 2 ersichtlich, ist am Vertikalträger 20 ein Entsorgungsbehälter 40 vorgesehen. Dieser Entsorgungsbehälter 40 ist lösbar mit dem Vertikalträger 20 verbunden. Dabei ist lösbare Verbindung zwischen dem Entsorgungsbehälter 40 und dem Vertikalträger 20 ist derart ausgebildet, dass der Entsorgungsbehälter 40 in X-Richtung mit dem Vertikalträger 20 bewegt werden kann. Im vorliegenden Ausführungsbeispiel stützt sich der Entsorgungsbehälter 40 mit seiner Bodenwand 42 auf dem Stützträger 24 ab. Insbesondere kann der Entsorgungsbehälter mit seinem unteren Bereich 25 (Fig. 4 und 6), welcher sich nach oben hin an die Bodenwand 42 anschließt in einer zugehörigen Halterung am Vertikalträger 20 bzw. seinem Stützträger 24 aufgenommen sein. Im Bereich eines Griffabschnitts 44 des Entsorgungsbehälters 40 erfolgt mittels einer im Griffabschnitt 44 ausgebildeten Ausnehmung 46 ein Eingriff mit dem Vertikalträger 20. Dieser Eingriff im Bereich der Ausnehmung 46 führt zu einer verbesserten Fixierung des Entsorgungsbehälters 40 am Vertikalträger 20, insbesondere wird hierdurch ein Verkippen des Entsorgungsbehälters 40 in Y-Richtung, also quer zur Bewegungsrichtung des Vertikalträgers 20 und des mit ihm gekoppelten Entsorgungsbehälters 40 verhindert.

In einer hier nicht dargestellten Alternative kann der Entsorgungsbehälter 40 beispielsweise derart am Vertikalträger 20 angebracht sein, dass er in X-Richtung zusätzlich auch relativ zum Vertikalträger 20 bewegt werden kann, so dass der Entsorgungsbehälter 40 an verschiedenen Relativpositionen bezogen auf den Vertikalträger 20 angeordnet und an diesen Positionen ggf. gehalten werden kann. Ferner ist es möglich, dass der Entsorgungsbehälter 40 in weiteren Richtungen relativ zum Vertikalträger 20 beweglich ist, insbesondere mittels entsprechender Antriebe und Halterungen, so dass auch an ein automatisiertes Auswechseln oder/und Entleeren des Entsorgungsbehälters gedacht werden kann. Die Anbringung des Entsorgungsbehälters 40 am Vertikalträger 20 kann auch auf andere Art und Weise erfolgen, wobei das Hauptaugenmerk darauf liegt, dass der Entsorgungsbehälter wenigstens zweitweise bewegungsgekoppelt mit dem Vertikalträger 20 ist, insbesondere während Pipettiervorgängen.

Die Funktionsweise der Dosiervorrichtung 10 mit dem beweglichen Entsorgungsbehälter wird nachfolgend kurz erläutert. Zu Beginn eines Pipettiervorgangs werden mittels der Pipettierkanäle 16 aus den Pipettierspitzenbehälter 32 neue Pipettierspitzen 18 geholt und mit den Pipettierkanälen gekoppelt. Anschließend erfolgt das Bewegen der Pipettierkanäle 16 und der daran angebrachten Pipettierspitzen 18 zu einem gewünschten Probenbehälter 34, insbesondere zu gewünschten Vertiefungen 36, aus denen Probenflüssigkeit aspiriert wird. Die mit Probenflüssigkeit gefüllten Pipettierspitzen 18 werden dann beispielsweise zu einem anderen Probenbehälter und insbesondere zu anderen Vertiefungen 36 bewegt, so dass die aufgenommene Probenflüssigkeit in diese Vertiefungen 36 dispensiert werden kann. Es ist selbstverständlich auch möglich, das aspirierte Probenflüssigkeit in kleinen Mengen auch in mehrere Vertiefungen 36 nacheinander dispensiert bzw. verteilt werden kann. Nach Abschluss des Dispensierens können die Pipettierkanäle 16 und die daran vorhandenen, gebrauchten Pipettierspitzen 18 in Richtung des Entsorgungsbehälters 40 bewegt werden. Sobald die Pipettierkanäle 16 eine gewünschte Y-Position erreicht haben, die einer Y-Position entspricht, die auch vom Entsorgungsbehälter 40 eingenommen wird, können die gebrauchten Pipettierspitzen 18 von den Pipettierkanälen getrennt werden und fallen bedingt durch die Schwerkraft nach unten in den Entsorgungsbehälter 40. Dieser Trennvorgang zwischen Pipettierspitzen 18 und Pipettierkanälen 16 kann an der oben erwähnten Y-Position auch dann erfolgen, wenn die Pipettiervorrichtung 12 bereits wieder in X-Richtung bewegt wird, insbesondere in Richtung zu den Pipettierspitzenbehältern 32. Die Entsorgung der gebrauchten Pipettierspitzen 18 erfolgt somit während einer Bewegung der Pipettiervorrichtung 12, die während des Pipettiervorgangs, bzw. während der Vorbereitung eines nächsten Pipettiervorgangs sowieso durchgeführt werden muss, um wieder ungebrauchte Pipettierspitzen 18 aus den Pipettierspitzenbehältern 32 zu holen. Hierdurch kann die während eines Pipettiervorgangs erforderliche Gesamtbewegung verringert werden verglichen mit einer Anordnung bei welcher ein Entsorgungsbehälter 40' unbeweglich im Bereich der Aufnahmeplatte 14 angeordnet ist, beispielsweise wie in Fig. 1 gestrichelt angedeutet an der rechten hinteren Ecke der Aufnahmeplatte 14.

Unter Bezugnahme auf die Figuren 4 bis 8 wird nachfolgend der Entsorgungsbehälter 40 genauer beschrieben, insbesondere im Hinblick auf die ausgerichtete Anordnung von gebrauchten Pipettierspitzen 18. Der Entsorgungsbehälter 40 weist die Bodenwand 42, sowie eine erste und eine zweite Seitenwand 48 und 50 auf, die mit der Bodenwand 42 verbunden sind. Die Seitenwände 48, 50 sind miteinander durch eine erste und eine zweite Stirnwand 52 und 54 verbunden. Im Ausführungsbeispiel ist der Griffabschnitt 44 an der ersten Stirnwand 52 angeordnet. Eine solche Anordnung des Griffabschnitts 44 bzw. einer anderen Art von Griff ist allerdings nicht einschränkend zu verstehen. Ein Griff kann auch an der zweiten Stirnwand 54 oder an einer der Seitenwände 48, 50 vorgesehen sein. Weiter ist es auch denkbar, dass mehr als ein Griff bzw. Griffabschnitt vorgesehen werden.

Die oberen Ränder der Seitenwände 48. 50 und der Stirnwände 52, 54 begrenzen eine Aufnahmeöffnung 56, durch welche hindurch Pipettierspitzen 18 in den Entsorgungsbehälter 40 fallen können. In der Regel werden in den Entsorgungsbehälter 40 fallende Pipettierspitzen 18 in im Wesentlichen vertikaler Richtung (Z-Richtung) ausgerichtet sein, da sie in einer solchen Ausrichtung an den Pipettierkanälen 16 angebracht sind (Fig. 1).

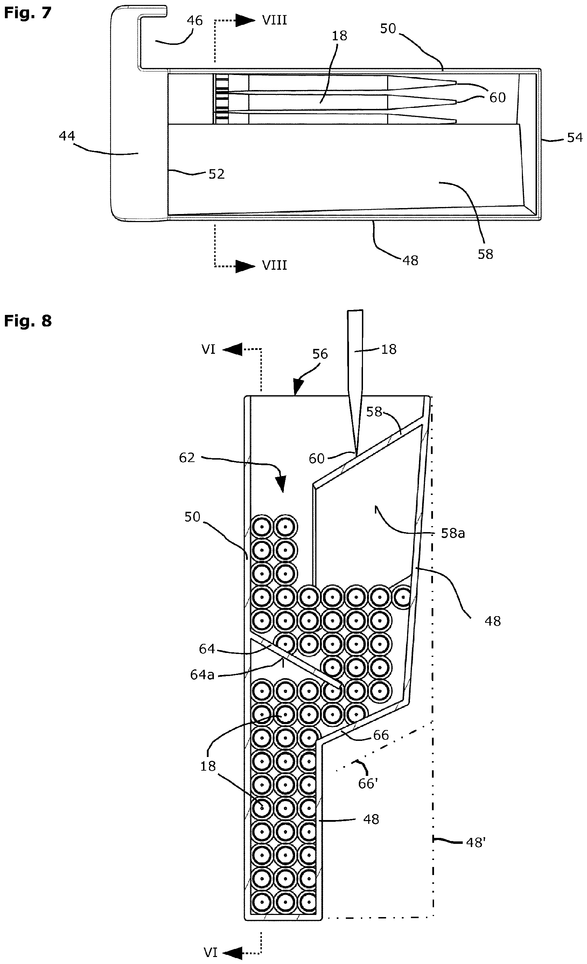

Im Entsorgungsbehälter 40 ist unterhalb der Aufnahmeöffnung 56 ein erstes Führungselement 58 angeordnet (Fig. 7 und 8), das in Form einer geneigten Aufprallfläche ausgeführt sein kann. Das erste Führungselement 58 ist bevorzugt in zwei Richtung geneigt, insbesondere derart, dass die Aufprallfläche von der ersten zur zweiten Stirnwand 52, 54 und von der ersten zur zweiten Seitenwand 48, 50 ein nach unten in das Innere des Entsorgungsbehälters 40 führendes Gefälle aufweist. Nimmt man die Bodenwand 42 als Bezugsebene ist die Aufprallfläche 58 bezogen auf die Hauptrichtungen der Bodenwandebene zu beiden Hauptrichtungen geneigt ausgeführt. Die in zwei Richtungen geneigte Aufprallfläche 58 führt dazu, dass eine in der Regel mit ihrer Spitze 60 zuerst auftreffende Pipettierspitze in Richtung der zweiten Stirnwand 54 und in Richtung der zweiten Seitenwand 50 abgelenkt wird, so dass die Pipettierspitze 18 von der im wesentlichen vertikalen Fallrichtung zunächst in eine Schräglage und später in eine im Wesentlichen horizontale Ausrichtung gebracht werden kann.

Die Aufprallfläche 58 erstreckt sich in Richtung der zweiten Seitenwand etwas über die Mitte des Entsorgungsbehälters, so dass ein Freiraum 62 gebildet wird, durch den hindurch die Pipettierspitzen weiter nach unten fallen können. Beim Durchtritt durch diesen Freiraum ist eine fallende Pipettierspitze aufgrund der Wirkung der Aufprallfläche 58 und der Schwerkraft bereits so ausgerichtet, dass ihre Spitze 60 zur zweiten Stirnwand 54 gerichtet ist und sie in einer sich einer horizontalen Lage annähernden Schräglage ausgerichtet ist.

Unterhalb des Freiraums 62 kann ein weiteres Führungselement 64 vorgesehen sein, das sich von der zweiten Seitenwand 50 geneigt in Richtung des Innenraums des Entsorgungsbehälters 40 erstreckt. Bevorzugt ist dieses zweite Führungselement 64, das auch als zweite Aufprallfläche 64 bezeichnet werden kann, nur in einer Richtung geneigt, derart, dass es ausgehend von der zweiten Seitenwand 50 ein zur ersten Seitenwand 48 nach unten gerichtetes Gefällte aufweist. Eine auf dieses zweite Führungselement 64 auftreffende Pipettierspitze wird entlang dieser geneigten zweiten Aufprallfläche 64 abrutschen und weiter nach unten fallen, wobei eine weitere Annäherung an die gewünschte Ausrichtung der Pipettierspitze in im Wesentlichen horizontaler Richtung erreicht werden kann.

Beim hier im Zusammenhang mit einer zugehörigen Pipettiervorrichtung 12 beispielhaft gezeigten Entsorgungsbehälter 40 weist die erste Seitenwand 48 unterhalb des zweiten Führungselements 64 einen nach innen weisenden geneigten Wandabschnitt 66 auf, der als weiteres (drittes) Führungselement bezeichnet werden kann. Entlang diesem dritten Führungselement 66 rutschen oder rollen die Pipettierspitzen weiter nach unten in Richtung zur Bodenwand 42. Ein alternatives drittes Führungselement 66' könnte bei einer im Wesentlichen gerade von oben nach unten verlaufenden ersten Seitenwand 48' auch analog zum zweiten Führungselement 64 mit der ersten Seitenwand 48' verbunden sein und in Richtung des Innenraums vorstehen, wie dies in Fig. 8 strichpunktiert angedeutet ist. Insgesamt ergibt sich eine Art Kaskade von Führungselementen 58, 64 und 66, die abwechselnd an den gegenüberliegenden Seitenwänden 48, 50 angeordnet oder durch diese gebildet sind, so dass die in den Entsorgungsbehälter 40 fallenden Pipettierspitzen 18 in die gewünschte ausgerichtete Anordnung gebracht werden können.

Eine derartige Anordnung von Führungselementen mit geneigten Aufprallflächen kann allgemein in jeder beliebigen Ausgestaltung eines Entsorgungsbehälters vorgesehen werden. Die Anordnung und Ausgestaltung der Führungselemente kann auch spezifisch für die zu entsorgenden Gegenstände ausgeführt sein, wobei die äußere Form des Entsorgungsbehälters gleich bleiben kann. So ist es beispielsweise denkbar, dass für kürzere Gegenstände eine andere Anordnung von Führungselementen vorteilhaft ist, um eine gewünschte Ausrichtung von kürzeren Gegenständen zu erreichen.

Der Entsorgungsbehälter 40, der Aufgrund der konstruktiven Randbedingungen durch die Pipettiervorrichtung 12 nach unten hin verjüngend ausgebildet ist, könnte auch zwei parallele Seitenwände aufweisen, so dass er eher quaderförmig ausgebildet wäre, wie dies durch die strich-punktierte Linie in Fig. 8 angedeutet ist, welche die erste Seitenwand 48' mit zugehörigem drittem Führungselement 66' repräsentiert. Insoweit kommt dem Entsorgungsbehälter und der Anordnung von wenigstens einem Führungselement zur Ausrichtung von hineinfallenden länglichen Gegenständen auch ein selbständiger Aspekt der Erfindung zu, unabhängig davon, ob der Entsorgungsbehälter für einen Pipettierautomaten und für die Aufnahme von Pipettierspitzen verwendet wird. Denkbar ist auch die Verwendung als Entsorgungsbehälter für Pipettierspitzen, die von einer Handpipette getrennt werden. Ganz allgemein kann ein hier vorgestellter Entsorgungsbehälter mit wenigstens einem Führungselement auch zur Ausrichtung von weiteren länglichen Gegenständen verwendet werden, wie etwa länglichen Röhrchen, zylinderartigen länglichen Stäben, Spritzen und dergleichen.

Die in den Entsorgungsbehälter 40 fallenden Pipettierspitzen oder im allgemeinen Fall andere längliche, insbesondere zylindrische Gegenstände, werden von der Bodenwand 42 aus nach oben hin aufeinander und nebeneinander angeordnet. In den Fig. 6 bis 8 wurde eine sehr vereinfachte schematische Darstellung der Anordnung der Pipettierspitzen 18 gewählt, bei welcher die Pipettierspitzen in horizontalen Reihen und vertikalen Spalten angeordnet sind. Es kann allerdings auch sein, dass sich die Pipettierspitzen 18 in benachbarten Reihen bezogen auf die Spalten versetzt anordnen, insbesondere so, dass eine Pipettierspitze einer oberen Reihe an den Umfangsflächen von zwei unteren Pipettierspitzen anliegt, etwa entsprechend dem Prinzip der Kugelpackung angewandt auf die zylindrische Form der Pipettierspitzen.

In der ersten Stirnwand 52 sind, wie dies in den Fig. 4 bis 6 ersichtlich ist, Entleerungsöffnungen 70 und 72 vorgesehen. Durch diese Entleerungsöffnungen 70, 72 können im Entsorgungsbehälter 40 aufgenommene und ausgerichtet angeordnete Pipettierspitzen 18 wieder aus dem Entsorgungsbehälter entfernt werden. Hierzu kann der Entsorgungsbehälter 40 von einer Stellung gemäß Fig. 4 (Bodenwand 42 befindet sich unten) in eine gedrehte Stellung gemäß Fig. 5 gebracht wird. In dieser gedrehten Entleerungsstellung gemäß Fig. 5 weist die Bodenwand 42 nach oben und ist so geneigt, dass im Entsorgungsbehälter 40 befindliche Pipettierspitzen in Richtung der zweiten Seitenwand 50 und der ersten Stirnwand 52, insbesondere in Richtung der Entleerungsöffnungen 70, 72 bewegt werden, insbesondere unter Einwirkung der Schwerkraft. Zusätzlich werden die im Entsorgungsbehälter 40 aufgenommenen Pipettierspitzen 18 unter Einwirkung der geneigten Flächen der jeweiligen Unterseiten 58a und 64a (Fig. 8) der Führungselemente 58 und 64 in Richtung der Entleerungsöffnungen 70, 72 bewegt, so dass sie durch diese hindurch aus dem Entsorgungsbehälter 40 gelangen. Beispielhaft ist dies in Fig. 5 durch die beiden Pipettierspitzen 18' angedeutet und den bei 18' angedeuteten Pfeil der Richtung, in welche sich die Pipettierspitzen 18' aus den Entleerungsöffnungen 70, 72 bewegen.

Es ist selbstverständlich auch denkbar, dass die Entleerungsöffnungen 70, 72 an der zweiten Stirnwand 54 vorgesehen sein können. Dies wäre beispielsweise dann vorteilhaft, wenn insbesondere ein Gefälle des ersten Führungselement 58 von der zweiten Stirnwand 54 zur ersten Stirnwand 52 nach unten weist (umgekehrt zur Darstellung gemäß Fig. 7 und 8) bei gleichbleibendem Gefälle zwischen den beiden Seitenwänden 50, 52 (also wie in den Fig. 7 und 8 dargestellt).

Insgesamt ergibt sich sowohl durch die Ausführung des Entsorgungsbehälters 40 als an der Pipettiervorrichtung angebrachtes bewegliches Element als auch durch die ausgerichtete Anordnung von Pipettierspitzen 18 im Entsorgungsbehälter 40 eine optimierte Nutzung. Dabei können durch die Pipettiervorrichtung zu fahrende Wege optimiert werden, weil die die Entsorgung von Pipettierspitzen während einer Zustellbewegung in X-Richtung erfolgen kann. Ferner kann das Volumen des Entsorgungsbehälters optimal ausgenutzt werden, so dass der Entsorgungsbehälter weniger oft entleert werden muss bzw. dass ein voller Entsorgungsbehälter weniger oft durch einen leeren ersetzt werden muss.

## Patentansprüche

1. Dosiervorrichtung, insbesondere Pipettierautomat, umfassend
eine in drei zueinander orthogonalen Richtungen (X, Y, Z) bewegliche Pipettiervorrichtung (12) mit wenigstens einem Pipettierkanal (16) an welchem eine Pipettierspitze (18) lösbar angebracht oder anbringbar ist, um Probenflüssigkeit aus einem der Dosiervorrichtung (10) zugeordneten Probenbehälter (34, 36) zu aspirieren oder in einen Probenbehälter (34, 36) zu dispensieren, wobei der wenigstens eine Pipettierkanal (16) derart eingerichtet ist, dass eine lösbar an ihm angebrachte Pipettierspitze (18) von dem Pipettierkanal (16) getrennt werden kann, vorzugsweise automatisch getrennt werden kann, und
einen an der Dosiervorrichtung (10) angeordneten Entsorgungsbehälter, (40) in welchem gebrauchte Pipettierspitzen (18) nach Trennung von einem betreffenden Pipettierkanal (16) aufnehmbar sind,
**dadurch gekennzeichnet, dass** der Entsorgungsbehälter (40) in wenigstens eine Richtung relativ zu dem wenigstens einen Probenbehälter (34, 36) beweglich an der Dosiervorrichtung (10) angeordnet ist, wobei die Pipettiervorrichtung (12) und der Entsorgungsbehälter (40) wenigstens temporär in der gleichen Richtung (X) beweglich sind, vorzugsweise synchron beweglich sind.

2. Dosiervorrichtung nach Anspruch 1, **dadurch gekennzeichnet, dass** die Probenbehälter (34, 36) in einem Pipettierbereich (38, B, L) einer Aufnahmeplatte (14) der Dosiervorrichtung (10) angeordnet sind, wobei die Aufnahmeplatte (14) in einer durch eine erste und eine zweite Richtung (X, Y) definierten Ebene angeordnet ist, und vorzugsweise im Wesentlichen horizontal ausgerichtet ist, und wobei die Pipettiervorrichtung (12) und der Entsorgungsbehälter (40) relativ zur Aufnahmeplatte (14) beweglich sind.

3. Dosiervorrichtung nach Anspruch 2, **dadurch gekennzeichnet, dass** der Entsorgungsbehälter (40) entlang eines Randes der Aufnahmeplatte (14) beweglich ist, wobei der Rand vorzugsweise parallel zur ersten Richtung (X) verläuft.

4. Dosiervorrichtung nach Anspruch 2 oder 3, **dadurch gekennzeichnet, dass** die Pipettiervorrichtung (12) einen zur Aufnahmeplatte (14) im Wesentlichen orthogonal ausgerichteten Vertikalträger (20) aufweist, welcher entlang der ersten Richtung (X) beweglich ist, vorzugsweise mittels einer motorischen Antriebseinrichtung (22), insbesondere Linearmotor, Elektromotor mit Getriebe oder dergleichen.

5. Dosiervorrichtung nach Anspruch 4, **dadurch gekennzeichnet, dass** der Entsorgungsbehälter (40) am Vertikalträger (20) anbringbar oder angebracht ist, wobei der Vertikalträger (20) und der Entsorgungsbehälter (40) in der angebrachten Stellung lösbar miteinander verbunden sind, vorzugsweise derart, dass der Vertikalträger (20) und der Entsorgungsbehälter (40) bewegungsgekoppelt sind.

6. Dosiervorrichtung nach Anspruch 4 oder 5, **dadurch gekennzeichnet, dass** der Entsorgungsbehälter (40) bezogen auf die zweite Richtung (Y) zwischen dem Vertikalträger (20) und dem Pipettierbereich (38, B, L) der Aufnahmeplatte (14) angeordnet ist.

7. Dosiervorrichtung nach einem der Ansprüche 1 bis 6, **dadurch gekennzeichnet, dass** der Entsorgungsbehälter relativ zur Pipettiervorrichtung, insbesondere relativ zum Vertikalträger in wenigstens einer Richtung, vorzugsweise der ersten Richtung (X) beweglich ist, um den Entsorgungsbehälter in eine gewünschte Position an der Pipettiervorrichtung, insbesondere gewünschte Relativstellung zum Vertikalträger bringen zu können.

8. Dosiervorrichtung nach dem Oberbegriff von Anspruch 1 oder nach einem der Ansprüche 1 bis 7, **dadurch gekennzeichnet, dass** der Entsorgungsbehälter (40) derart ausgeführt ist, dass darin aufgenommene Pipettierspitzen (18) nach dem Trennen von einem betreffenden Pipettierkanal (16) im Entsorgungsbehälter (40) ausgerichtet angeordnet sind bzw. werden.

9. Dosiervorrichtung nach Anspruch 8, **dadurch gekennzeichnet, dass** im Entsorgungsbehälter (40) wenigstens ein Führungselement (58, 64, 66) vorgesehen ist, das derart ausgebildet ist, dass von dem wenigstens einen Pipettierkanal (16) in den Entsorgungsbehälter (40) fallende Pipettierspitzen (18) unter Einwirkung des wenigstens einen Führungselements (58, 64, 66) und der Schwerkraft ausgerichtet im Entsorgungsbehälter (40) angeordnet ist bzw. wird, wobei die Pipettierspitzen (18) vorzugsweise auf ihrer Umfangsfläche liegend im Entsorgungsbehälter (40) nebeneinander und übereinander angeordnet sind bzw. werden, wobei vorzugsweise der Entsorgungsbehälter (40) eine Aufnahmeöffnung (56) aufweist, die in der angebrachten Stellung an der Pipettiervorrichtung (12) dem wenigstens einen Pipettierkanal (16) zugewandt ist und durch die hindurch im Entsorgungsbehälter (40) aufzunehmende Pipettierspitzen (18) fallen.

10. Dosiervorrichtung nach Anspruch 9, **dadurch gekennzeichnet, dass** der Entsorgungsbehälter (40) eine Bodenwand (42), eine erste und eine zweite mit der Bodenwand (42) verbundene Seitenwand (48, 50) sowie eine erste und eine zweite mit der Bodenwand (42) und den Seitenwänden (48, 50) verbundene Stirnwand aufweist (52, 54), wobei die oberen Ränder der Seitenwände (48, 50) und der Stirnwände (52, 54) die Aufnahmeöffnung (56) begrenzen.

11. Dosiervorrichtung nach Anspruch 9 oder 10, **dadurch gekennzeichnet, dass** unterhalb der Aufnahmeöffnung (56) ein erstes Führungselement (58) im Entsorgungsbehälter (40) angeordnet ist, das durch eine geneigte erste Aufprallfläche gebildet ist.

12. Dosiervorrichtung nach Anspruch 10 und 11, **dadurch gekennzeichnet, dass** sich die erste Aufprallfläche (58) von der ersten Seitenwand (48) des Entsorgungsbehälters (40) in Richtung der zweiten Seitenwand (50) und in Richtung der beiden Stirnwände (52, 54) erstreckt, wobei zwischen der zweiten Seitenwand (50) und einem der zweiten Seitenwand zugewandten Rand der ersten Aufprallfläche (58) ein Freiraum (62) gebildet ist, durch den an der ersten Aufprallfläche (58) abgelenkte Pipettierspitzen (18) fallen können.

13. Dosiervorrichtung nach einem der Ansprüche 10 bis 12, **dadurch gekennzeichnet, dass** die erste Aufprallfläche (58) bezogen auf eine durch die Bodenwand (42) definierte Ebene vorzugsweise zu beiden Hauptrichtungen der Bodenwandebene geneigt ausgeführt ist, wobei vorzugsweise die Bodenwandebene eine parallele Ebene zu der durch die erste und zweite Richtung (X, Y) definierten Ebene bzw. zur Aufnahmeplatte (14) bildet, wenn der Entsorgungsbehälter (40) an der Dosiervorrichtung (12) angebracht ist.

14. Dosiervorrichtung nach Anspruch 12 oder 13, **dadurch gekennzeichnet, dass** unterhalb der ersten Aufprallfläche (58), insbesondere unterhalb des Freiraums (62) wenigstens ein weiteres Führungselement (64, 66) ausgebildet ist, das vorzugsweise als geneigte weitere Aufprallfläche (64, 66) ausgebildet ist, wobei vorzugsweise die erste und die wenigstens eine weitere Aufprallfläche (58, 64, 66) kaskadenartig abwechselnd an der ersten und der zweiten Seitenwand (48, 50) angeordnet sind.

15. Dosiervorrichtung nach einem der Ansprüche 11 bis 14, **dadurch gekennzeichnet, dass** in einer Stirnwand (52, 54) wenigstens eine Entleerungsöffnung (70, 72) vorgesehen ist, durch welche hindurch im Entsorgungsbehälter (40) aufgenommene Pipettierspitzen (18) aus dem Entsorgungsbehälter (40) entfernbar sind, wobei vorzugsweise in der betreffenden Stirnwand (52) zwei übereinander angeordnete Entleerungsöffnungen (70, 72) vorgesehen sind, wobei vorzugsweise die Führungselemente (58, 64, 66) im Entsorgungsbehälter (40) derart angeordnet sind, dass im Entsorgungsbehälter (40) aufgenommene Pipettierspitzen (18, 18') in einer bestimmten Entleerungsstellung des Entsorgungsbehälters (40) unter Wirkung der Führungselemente (58, 64, 66) und der Schwerkraft in Richtung (18') der Entleerungsöffnungen (70, 72) bewegt werden.

## Claims

1. A metering apparatus, in particular a pipetting machine, with
a pipetting device (12) moveable in three directions (X, Y, Z) orthogonal to each other with at least one pipetting channel (16) to which a pipetting tip (18) is or can be attached detachably, to aspirate sample liquid from a sample container (34, 36) corresponding to the metering apparatus (10) or to dispense the sample liquid in a sample container (34, 36), wherein the at least one pipetting channel (16) is configured such that a pipetting tip (18) detachably attached to it may be removed from the pipetting channel (16), preferably automatically, and
a disposal container (40) arranged on the metering apparatus (10), into which used pipetting tips (18) can be accommodated after removing from a corresponding pipetting channel (16),
**characterized in that**
the disposal container (40) is arranged on the metering apparatus (10) moveably along at least one direction relative to the at least one sample container (34, 36), wherein the pipetting device (12) and the disposal container (40) are at least temporarily moveable in the same direction (X), preferably synchronously.

2. The metering apparatus according to claim 1, **characterized in that** the sample containers (34, 36) are arranged in a pipetting region (38, B, L) of a receiving plate (14) of the metering apparatus (10), wherein the receiving plate (14) is arranged in a plane defined by a first and a second direction (X, Y) and is preferably essentially horizontally aligned, and wherein the pipetting device (12) and the disposal container (40) are moveable relative to the receiving plate (14).

3. The metering apparatus according to claim 2, **characterized in that** the disposal container (40) is moveable along an edge of the receiving plate (14), wherein the edge is preferably parallel to the first direction (X).

4. The metering apparatus according to claims 2 or 3, **characterized in that** the pipetting device (12) comprises a vertical support (20) aligned essentially orthogonal to the receiving plate (14), which is moveable along the first direction (X), preferably by means of a motor driving unit (22), in particular a linear motor, an electro motor with gear or the like.

5. The metering apparatus according to claim 4, **characterized in that** the disposal container (40) is or can be attached to the vertical support (20), wherein the vertical support (20) and the disposal container (40) are connected to each other detachably in the attached position, preferably such that the vertical support (20) and the disposal container (40) perform coupled movement.

6. The metering apparatus according to claims 4 or 5, **characterized in that** the disposal container (40) is arranged between the vertical support (20) and the pipetting region (38, B, L) of the receiving plate (14) with respect to the second direction (Y).

7. The metering apparatus according to one of claims 1 to 6, **characterized in that** the disposal container is moveable relative to the pipetting device, in particular relative to the vertical support in at least one direction, preferably in the first direction (X), to be able to bring the disposal container in a desired position on the pipetting device, in particular in a desired relative position to the vertical support.

8. The metering apparatus according to the preamble of claim 1 or according to one claims 1 to 7, **characterized in that** the disposal container (40) is formed such that pipetting tips (18) accommodated therein after removal from a corresponding pipetting channel (16) are or can be arranged aligned inside the disposal container (40).

9. The metering apparatus according to claim 8, **characterized in that** inside the disposal container (40) at least one guiding element (58, 64, 66) is provided that is formed such that pipetting tips (18) falling from the at least one pipetting channel (16) into the disposal container (40) are or can be arranged under influence of the at least guiding element (58, 64, 66) and gravity aligned inside the disposal container (40), wherein the pipetting tips (18) are or can be arranged preferably lying on their peripheral surfaces next to each other and above each other inside the disposal container (40), wherein preferably the disposal container (40) comprises a receiving opening (56), which is facing in the attached position on the pipetting device (12) the at least one pipetting channel (16) and through which pipetting tips (18) to be accommodated inside the disposal container (40) fall.

10. The metering apparatus according to claim 9, **characterized in that** the disposal container (40) has a bottom wall (42), a first and a second sidewall (48, 50) connected with the bottom wall (42) as well as a first and a second front wall (52, 54) connected with the bottom wall (42) and the sidewalls (48, 50), wherein the upper edges of the sidewalls (48, 50) and the front walls (52, 54) delimit the receiving opening (56).

11. The metering apparatus according to claims 9 or 10, **characterized in that** below the receiving opening (56) a first guiding element (58) is arranged inside the disposal container (40), which is formed by an inclined first collision surface.

12. The metering apparatus according to claims 10 and 11, **characterized in that** the first collision surface (58) extends from the first sidewall (48) of the disposal container (40) in direction to the second sidewall (50) and in direction to both front walls (52, 54), wherein between the second sidewall (50) and an edge of the first collision surface (58) facing the second sidewall a free space (62) is formed, through which pipetting tips (18) deflected at the first collision surface (58) may fall.

13. The metering apparatus according to one of claims 10 to 12, **characterized in that** the first collision surface (58) is formed inclined with respect to a plane defined by the bottom wall (42), preferably with respect to both main directions of the bottom wall plane, wherein preferably the bottom wall plane forms a parallel plane to the plane defined by the first and second directions (X, Y) or the receiving plate (14), if the disposal container (40) is attached on the metering apparatus (12).

14. The metering apparatus according to claims 12 or 13, **characterized in that** below the first collision surface (58), in particular below the free space (62), at least a further guiding element (64, 66) is formed, which is preferably formed as a further collision surface (64, 66), wherein preferably the first and the at least one further collision surface (58, 64, 66) are arranged in a cascade-like manner alternatingly at the first and the second sidewalls (48, 50).

15. The metering apparatus according to one of claims 11 to 14, **characterized in that** in one front wall (52, 54) at least one discharging opening (70, 72) is provided, through which pipetting tips (18) accommodated inside the disposal container (40) are removable from the container (40), wherein preferably in the respective front wall (52) two discharging openings (70, 72) are provided on top of each other, wherein preferably the guiding elements (58, 64, 66) inside the disposal container (40) are arranged such that pipetting tips (18, 18') accommodated inside the disposal container (40) are moved to a specific discharging position of the disposal container (40) under influence of the guiding elements (58, 64, 66) and gravity in direction (18') of the discharging openings (70, 72).

## Revendications

1. Dispositif de dosage, en particulier dispositif de pipetage automatique, comprenant
un dispositif de pipetage (12) mobile dans trois directions (X, Y, Z) orthogonales les unes par rapport aux autres, avec au moins un conduit de pipetage (16) sur lequel une pointe de pipetage (18) est montée ou peut être montée de manière amovible pour aspirer un échantillon liquide dans un récipient d'échantillon (34, 36) associé au dispositif de dosage (10) ou le distribuer dans un récipient d'échantillon (34, 36), dans lequel le au moins un conduit de pipetage (16) est installé de telle sorte qu'une pointe de pipetage (18) montée de manière amovible sur lui puisse être séparée du conduit de pipetage (16), de préférence automatiquement, et
un récipient d'évacuation (40) disposé sur le dispositif de dosage (10), dans lequel les pointes de pipetage (18) usagées peuvent être reçues après avoir été séparées d'un conduit de pipetage (16) concerné,
**caractérisé en ce que** le récipient d'évacuation (40) est disposé sur le dispositif de dosage (10) en étant mobile dans au moins une direction par rapport au au moins un récipient d'échantillon (34, 36), dans lequel le dispositif de pipetage (12) et le récipient d'évacuation (40) sont mobiles au moins temporairement dans la même direction (X), de manière synchrone.

2. Dispositif de dosage selon la revendication 1, **caractérisé en ce que** les récipients d'échantillon (34, 36) sont disposés dans une zone de pipetage (38, B, L) d'une plaque de réception (14) du dispositif de dosage (10), dans lequel la plaque de réception (14) est disposée dans un plan défini par des première et deuxième directions (X, Y) et est de préférence orientée sensiblement à l'horizontale, et dans lequel le dispositif de pipetage (12) et le récipient d'évacuation (40) sont mobiles par rapport à la plaque de réception (14).

3. Dispositif de dosage selon la revendication 2, **caractérisé en ce que** le récipient d'évacuation (40) est mobile le long d'un bord de la plaque de réception (14), dans lequel le bord s'étend de préférence parallèlement à la première direction (X).

4. Dispositif de dosage selon la revendication 2 ou 3, **caractérisé en ce que** le dispositif de pipetage (12) comporte un support vertical (20), orienté sensiblement orthogonalement par rapport à la plaque de réception (14), qui est mobile le long de la première direction (X), de préférence à l'aide d'un dispositif d'entraînement à moteur (22), en particulier un moteur linéaire, un moteur électrique avec transmission ou similaire.

5. Dispositif de dosage selon la revendication 4, **caractérisé en ce que** le récipient d'évacuation (40) peut être monté ou est monté sur le support vertical (20), dans lequel le support vertical (20) et le récipient d'évacuation (40) sont reliés entre eux de manière amovible dans la position appropriée, de préférence de telle sorte que le support vertical (20) et le récipient d'évacuation (40) soient couplés dans leur mouvement.

6. Dispositif de dosage selon la revendication 4 ou 5, **caractérisé en ce que** le récipient d'évacuation (40) est disposé entre le support vertical (20) et la zone de pipetage (38, B, L) de la plaque de réception (14) plaque de réception (14) par rapport à la deuxième direction (Y).

7. Dispositif de dosage selon l'une des revendications 1 à 6, **caractérisé en ce que** le récipient d'évacuation est mobile dans au moins une direction, de préférence dans la première direction (X), par rapport au dispositif de pipetage, en particulier par rapport au support vertical, pour pouvoir amener le récipient d'évacuation dans une position souhaitée sur le dispositif de pipetage, en particulier une position relative souhaitée par rapport au support vertical.

8. Dispositif de dosage selon le préambule de la revendication 1 ou selon l'une des revendications 1 à 7, **caractérisé en ce que** le récipient d'évacuation (40) est réalisé de telle sorte que les pointes de pipetage (18) qu'il reçoit soient orientées ou qu'on les oriente dans le récipient d'évacuation (40) après qu'elles ont été séparées d'un conduit de pipetage (16) concerné.

9. Dispositif de dosage selon la revendication 8, **caractérisé en ce qu'**il est prévu dans le récipient d'évacuation (40) au moins un élément de guidage (58, 64, 66) qui est formé de telle sorte que les pointes de pipetage (18) tombant du au moins un conduit de pipetage (16) dans le récipient d'évacuation (40) soient disposées ou qu'on les dispose dans le récipient d'évacuation (40) en étant orientées sous l'action du au moins un élément de guidage (58, 64, 66) et de la gravité, dans lequel les pointes de pipetage (18) sont disposées ou on les dispose côte à côte et les unes sur les autres dans le récipient d'évacuation (40), de préférence couchées sur leur surface circonférentielle, dans lequel de préférence le récipient d'évacuation (40) présente une ouverture de réception (56) qui, dans la position appropriée sur le dispositif de pipetage (12), est tournée vers le au moins un conduit de pipetage (16) et à travers laquelle les pointes de pipetage (18) à recevoir dans le récipient d'évacuation (40) tombent.

10. Dispositif de dosage selon la revendication 9, **caractérisé en ce que** le récipient d'évacuation (40) comporte une paroi inférieure (42), des première et deuxième parois latérales (48, 50) reliées à la paroi inférieure (42) ainsi que des première et deuxième parois frontales reliées à la paroi inférieure (42) et aux parois latérales (48, 50), dans lequel les bords supérieurs des parois latérales (48, 50) et des parois frontales (52, 54) délimitent l'ouverture de réception (56).

11. Dispositif de dosage selon la revendication 9 ou 10, **caractérisé en ce qu'**il est prévu dans le récipient d'évacuation (40), au-dessous de l'ouverture de réception (56), un premier élément de guidage (58) qui est formé par une première surface d'impact inclinée.

12. Dispositif de dosage selon la revendication 10 et 11, **caractérisé en ce que** la première surface d'impact (58) s'étend de la première paroi latérale (48) du récipient d'évacuation (40) en direction de la deuxième paroi latérale (50) et en direction des deux parois frontales (52, 54), dans lequel il est prévu entre la deuxième paroi latérale (50) et un bord de la première paroi d'impact (58) tourné vers la deuxième paroi latérale un espace libre (62) à travers lequel les pointes de pipetage (18) déviées sur la première surface d'impact (58) tombent.

13. Dispositif de dosage selon l'une des revendications 10 à 12, **caractérisé en ce que** la première surface d'impact (58) est inclinée, par rapport à un plan défini par la paroi inférieure (42), de préférence vers les deux directions principales du plan de paroi inférieure, dans lequel de préférence le plan de paroi inférieure forme un plan parallèle à un plan défini par les première et deuxième directions (X, Y) ou à la plaque de réception (14) quand le récipient d'évacuation (40) est monté sur le dispositif de dosage (12).

14. Dispositif de dosage selon la revendication 12 ou 13 , **caractérisé en ce qu'**il est prévu au-dessous de la première surface d'impact (58), en particulier au-dessous de l'espace libre (62), au moins un autre élément de guidage (64, 66) qui est formé de préférence comme autre surface d'impact inclinée (64, 66), dans lequel de préférence les première et au moins une autre surfaces d'impact (58, 64, 66) sont disposées en cascade et en alternance sur les première et deuxième parois latérales (48, 50).

15. Dispositif de dosage selon l'une des revendications 11 à 14, **caractérisé en ce qu'**il est prévu dans une paroi frontale (52, 54) au moins une ouverture de vidage (70, 72) à travers laquelle les pointes de pipetage (18) reçues dans le récipient d'évacuation (40) peuvent être enlevées de celui-ci, dans lequel il est prévu de préférence dans la paroi frontale (52) concernée deux ouvertures de vidage (70, 72) disposées l'une au-dessus de l'autre, dans lequel de préférence les éléments de guidage (58, 64, 66) sont disposés dans le récipient d'évacuation (40) de telle sorte que les pointes de pipetage (18, 18') reçues dans le récipient d'évacuation (40) soient déplacées, dans une position de vidage définie du récipient d'évacuation (40), dans la direction (18') des ouvertures de vidage (70, 72) sous l'action des éléments de guidage (58, 64, 66) et de la gravité,
